# FASCICULE DE BREVET EUROPEEN

(11) **EP 0 702 637 B1**
(45) Date de publication et mention de la délivrance du brevet: **27.12.1996**
(21) Numéro de dépôt: 94917065.8
(22) Date de dépôt: 31.05.1994
(51) Int. Cl.: B60T 13/57, B60T 13/569

(54) **SERVOMOTEUR PNEUMATIQUE**
PNEUMATISCHER SERVOMOTOR
PNEUMATIC BRAKE SERVO

(30) Priorité: 14.06.1993 FR 9307123
(43) Date de publication de la demande: 27.03.1996
(73) Titulaire: ALLIEDSIGNAL EUROPE SERVICES TECHNIQUES, 93700 Drancy (FR)
(72) Inventeur: MEYNIER, Guy, F-93600 Aulnay-sous-Bois (FR)
(86) Numéro de dépôt international: FR9400627
(87) Numéro de publication internationale: WO9429154

(56) Documents cités:
- EP-A- 0 164 198
- DE-A- 4 120 118

## Description

La présente invention concerne les servomoteurs pneumatiques, et plus particulièrement du type de ceux qui sont utilisés sur les véhicules automobiles pour fournir une assistance au freinage.

De tels servomoteurs, tels qu'illustrés par exemple par le document EP-A-0 101 658, ne répondent qu'imparfaitement aux exigences actuelles des constructeurs d'automobiles, qui veulent des appareils toujours plus performants. C'est ainsi que les servomoteurs actuels sont jugés bruyants, ceci étant dû en partie au fait que, habituellement, la prise d'air pour alimenter la chambre arrière est située dans l'habitacle du véhicule. C'est ainsi aussi que l'encombrement des servomoteurs, habituellement disposés dans le compartiment moteur du véhicule, doit sans cesse être réduit, en ayant des performances au moins égales, sinon supérieures. C'est ainsi également que l'effort d'attaque, le temps de réponse et la course morte des servomoteurs connus, c'est-à-dire le travail d'entrée qu'il faut appliquer à leur tige de commande avant de recueillir un effort en sortie du servomoteur, et le délai d'obtention de cet effort de sortie mesuré après le début de l'application de l'effort d'entrée, sont jugés trop importants, notamment pour des freinages intenses où une réponse immédiate du système de freinage est désirable. L'effort d'attaque, le temps de réponse et la course morte sont des facteurs objectifs primordiaux de ce qu'il est convenu d'appeler la "sensation pédale" ressentie subjectivement par le conducteur du véhicule.

Le document US-A-5 184 468, correspondant au préambule de la revendication principale, tente de résoudre ces problèmes et propose un servomoteur dans lequel la transmission de la force d'actionnement sur le piston de valve actionnant le moyen de valve s'effectue au moyen d'un levier coudé qui est relié à la tige de commande et qui déplace en translation le piston de valve portant un siège de valve, dans la direction de déplacement de la tige de commande. Une telle structure permet d'obtenir une longueur axiale hors-tout de l'ensemble servomoteur maître-cylindre réduite, mais ne résoud pas les problèmes liés à la sensation pédale. De plus, le long bras de levier du levier coudé déplaçant le piston de valve en translation, bras qui provoque des couples de basculement, se révèle également peu avantageux, de sorte qu'à l'occasion de son guidage dans le boîtier de commande, des frottements considérables se produisent.

Le document FR-A-2 680 346 tente d'apporter une solution à ces divers problèmes et propose un servomoteur dans lequel, lors du pré-remplissage du système de freinage correspondant à l'application des garnitures de frein ou au développement d'une faible pression de freinage, on obtient un raccourcissement de la course d'actionnement. Pour cela, la valve de commande est agencée de façon à pouvoir être actionnée dans le sens opposé au sens d'actionnement de la tige de commande, au moyen d'un mécanisme à levier, à rapport variable de transmission, qui est agencé de façon à pouvoir être mis hors service, sur le plan de son action, après une course d'actionnement du maître-cylindre de frein qui peut être déterminée au préalable. Le mécanisme à levier est formé d'un premier levier d'inversion qui est en liaison de transmission de force avec la tige de commande et d'un second levier d'amplification qui est monté à demeure sur le boîtier de commande en étant agencé de façon à pouvoir tourner d'une manière limitée et qui coopère avec une surface d'appui fixe par rapport au boîtier de servomoteur, le levier d'inversion étant monté de façon à pouvoir tourner d'une manière limitée sur le levier d'amplification, et la distance entre le point de rotation du levier d'amplification et son point d'attaque sur la surface d'appui étant modifiée pendant l'actionnement. L'actionnement de la valve de commande s'effectue au moyen d'une tige d'actionnement qui est guidée de manière étanche dans le boîtier de commande et qui, d'une part, prend appui axialement sur le levier d'inversion et d'autre part, est accouplée à la tige de piston qui coopère avec le piston primaire du maître-cylindre, l'accouplement de la tige d'actionnement avec la tige de piston s'effectuant au moyen d'un élément de transmission de force entourant en forme de fourche la tige de piston et prenant appui axialement sur cette dernière.

Selon ce document, une tringlerie complexe est nécessaire pour commander le moyen de valve, dans le seul but d'amplifier la course du piston primaire du maître-cylindre par rapport à la course du piston primaire du maître-cylindre par rapport à la course de la tige de commande du servomoteur, pendant la phase de fonctionnement connue sous le nom de course d'approche. Une telle tringlerie est par nature peu fiable et génératrice de frottements. De plus, des paramètres tels que le saut, la course morte ou l'effort d'attaque du servomoteur ne sont pas maîtrisables.

La présente invention a par conséquent pour objet de proposer un servomoteur procurant une sensation pédale améliorée, c'est-à-dire un servomoteur ayant un effort d'attaque plus faible, un temps de réponse plus court et une course morte moins longue que dans les servomoteurs connus, et ayant de plus un encombrement réduit et un fonctionnement fiable et silencieux.

La présente invention concerne donc un servomoteur pneumatique d'assistance au freinage comportant à l'intérieur d'une enveloppe un piston délimitant à l'aide d'une membrane déroulante une chambre avant reliée en permanence à une source de basse pression et une chambre arrière reliée sélectivement à la chambre avant ou à une source de haute pression par un moyen de valve actionné par une tige de commande disposée selon l'axe de symétrie du servomoteur et susceptible de s'appuyer, par l'intermédiaire de la face avant d'un plongeur sur une première face d'un disque de réaction solidaire par une deuxième face d'une tige de poussée, le moyen de valve étant commandé par une clé solidaire du plongeur et comportant un élément de clapet coopérant avec un premier siège de valve formé sur le piston et un second siège de valve formé sur un piston de valve solidaire de la clé.

Selon l'invention, le moyen de valve est entièrement disposé dans une enceinte formée sur le piston, l'enceinte comportant un volume arrière et un volume avant séparés de façon étanche par un élément d'étanchéification solidaire du piston de valve, le moyen de valve étant disposé dans le volume avant de l'enceinte formée sur le piston, le volume arrière de l'enceinte étant relié en permanence à la chambre arrière du servomoteur.

D'autres buts, caractéristiques et avantages de la présente invention ressortiront clairement de la description qui suit d'un mode de réalisation, donné à titre d'exemple non limitatif, en référence aux dessins annexés dans lesquels :
- La Figure 1 est une vue de côté, en coupe longitudinale, représentant un servomoteur pneumatique d'assistance au freinage réalisé selon la présente invention ;
- La Figure 2 est une vue en coupe transversale selon la ligne II-II de la Figure 1 ;
- La Figure 3 est une vue en coupe longitudinale selon la ligne III-III de la Figure 2 ;
- La Figure 4 est une vue en coupe longitudinale selon la ligne IV-IV de la Figure 2 ;
- La Figure 5 est une vue en coupe longitudinale à plus grande échelle du moyen de valve équipant le servomoteur de la Figure 1 ;
- Les Figures 6 et 7 sont des vues, en coupe longitudinale et transversale respectivement, d'une variante du servomoteur de la Figure 1 ;
- La Figure 8 est une courbe représentant schématiquement l'évolution de la force Fs exercée sur la tige de poussée en sortie du servomoteur en fonction de la force Fe exercée sur la tige de commande à l'entrée du servomoteur ; et
- La Figure 9 est une vue en coupe longitudinale analogue à celle de la Figure 5 illustrant une variante du moyen de valve destiné à équiper le servomoteur de la Figure 1.

Sur les différentes Figures, les mêmes éléments portent les mêmes signes de référence, éventuellement affectés d'un "prime".

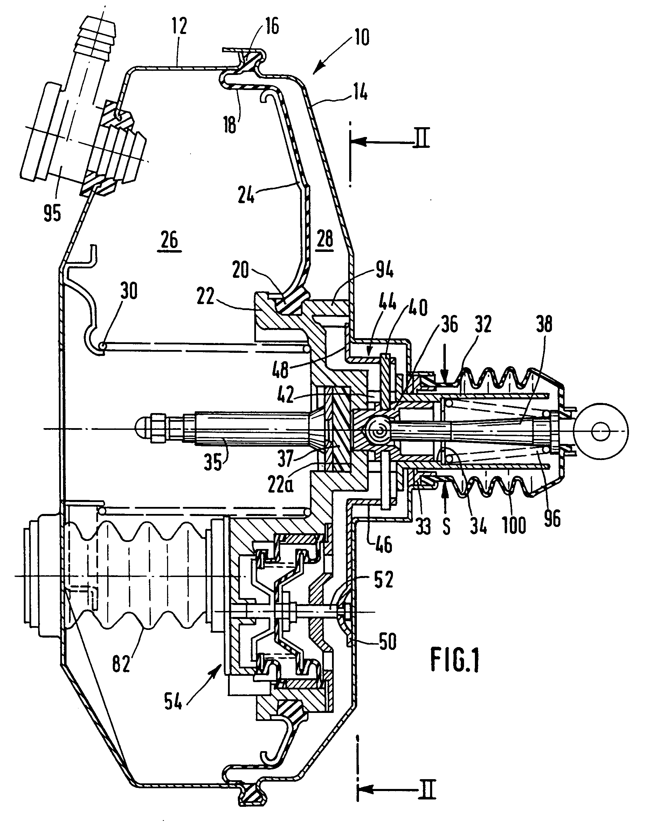

On a représenté sur les Figures un servomoteur d'assistance au freinage prévu pour être placé de façon habituelle entre la pédale de frein d'un véhicule et le maître-cylindre commandant le circuit hydraulique de freinage de ce véhicule, pour amplifier l'effort exercé par le conducteur sur la pédale de frein. Par convention, on appelle "avant" du servomoteur la partie de celui-ci tournée vers le maître-cylindre et "arrière" la partie tournée vers la pédale de fiein. Sur les Figures 1, 3 à 6 et 9, l'avant est ainsi à gauche et l'arrière à droite.

Le servomoteur représenté sur les Figures comporte une enveloppe extérieure 10 en forme de coquille présentant une symétrie de révolution autour d'un axe de symétrie X-X'. L'enveloppe 10 est par exemple formée d'un cylindre avant 12 et d'un couvercle arrière 14 serti sur le cylindre de façon à recevoir de façon étanche un bourrelet périphérique extérieur 16 d'une membrane déroulante souple 18, par exemple en élastomère. Le bourrelet périphérique intérieur 20 de la membrane 18 est reçu de façon étanche dans une gorge annulaire formée sur la surface périphérique extérieure d'un piston d'assistance 22 disposé selon l'axe X-X' du servomoteur. La membrane 18 est renforcée par un support métallique 24, encore appelé jupe, et définit à l'intérieur de l'espace délimité par l'enveloppe 10 une chambre avant 26 et une chambre arrière 28.

Un ressort de compression 30 interposé entre le piston 22 et la paroi avant du cylindre 12 maintient normalement le piston 22 dans une position arrière de repos illustrée sur la Figure 1, dans laquelle la chambre avant 26 présente son volume maximal et la chambre arrière 28 son volume minimal.

Le piston 22 se prolonge vers l'arrière sous la forme d'une partie tubulaire 32 qui traverse la paroi arrière du couvercle 14 à l'aide d'un ensemble de guidage 33. La partie tubulaire 32 présente un alésage 34 dans lequel est reçu en coulissement un plongeur 36 présentant également une symétrie du révolution autour de l'axe X-X'. L'extrémité avant d'une tige de commande 38 du servomoteur, disposée également selon l'axe X-X', est montée rotulante dans le plongeur 36. L'extrémité arrière de cette tige 38, qui fait saillie à l'arrière de la partie tubulaire 32 du piston 22, est commandée directement par la pédale de frein du véhicule (non représentée).

Dans sa partie centrale, le piston 22 comprend une face avant annulaire 22a au centre de laquelle débouche l'alésage 34. Cette face avant annulaire 22a agit sur une face arrière d'une tige de poussée 35 au travers d'un disque de réaction 37 en matériau déformable tel qu'un élastomère.

Le plongeur 36 est solidaire d'un organe de montage 40 traversant des lumières radiales 42 formées dans le piston 22. L'organe de montage 40 est lui-même solidaire d'une clé, désignée dans son ensemble par la référence 44, formée d'une partie arrière cylindrique 46 d'axe X-X' fixée à l'organe de montage 40, et d'une partie avant annulaire 48 perpendiculaire à l'axe X-X'.

La partie annulaire 48 de la clé 44 est formée avec un prolongement radial 50, lui-même solidaire d'une tige 52 s'étendant axialement vers l'avant parallèlement à l'axe X-X'.

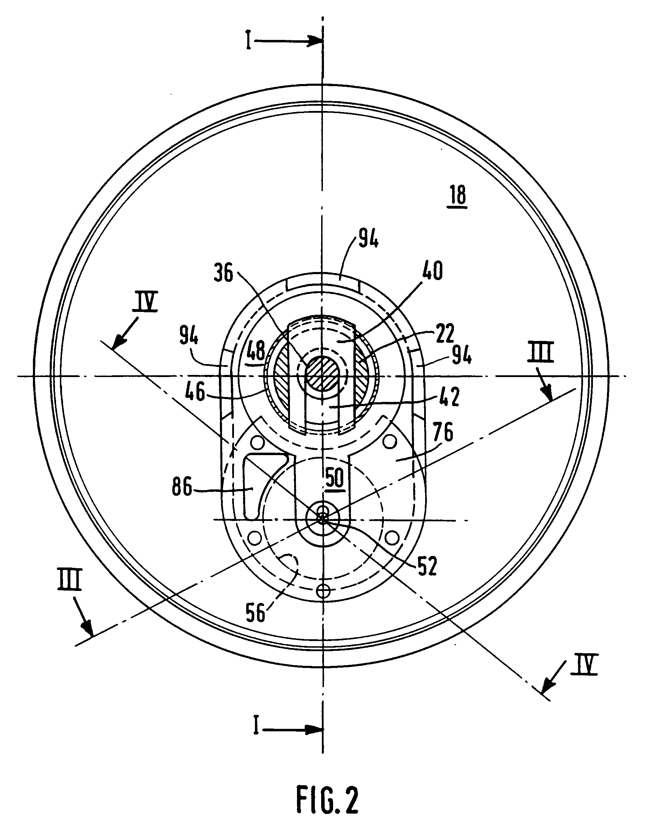

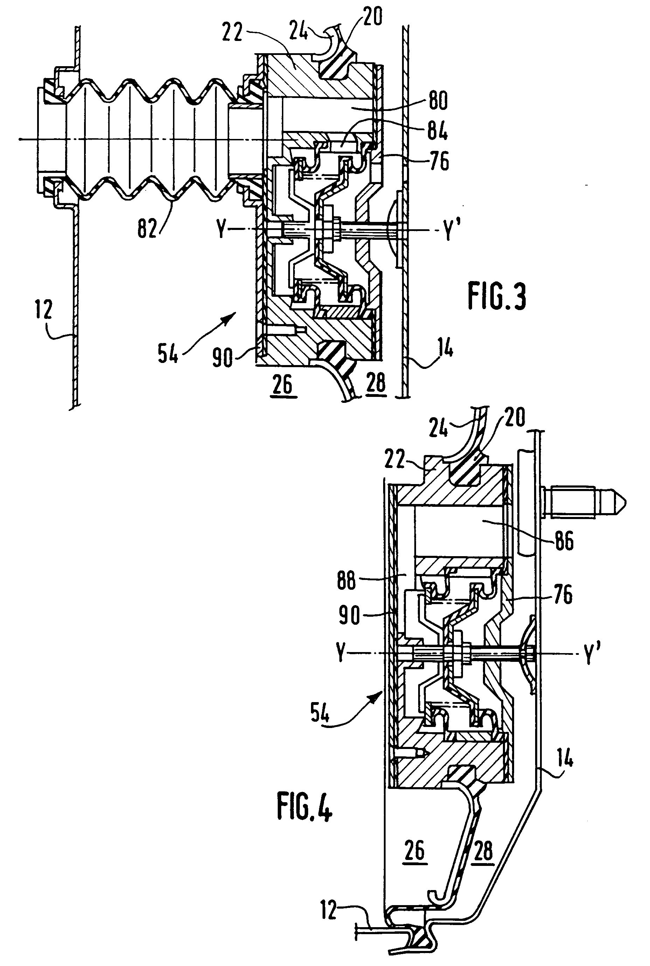

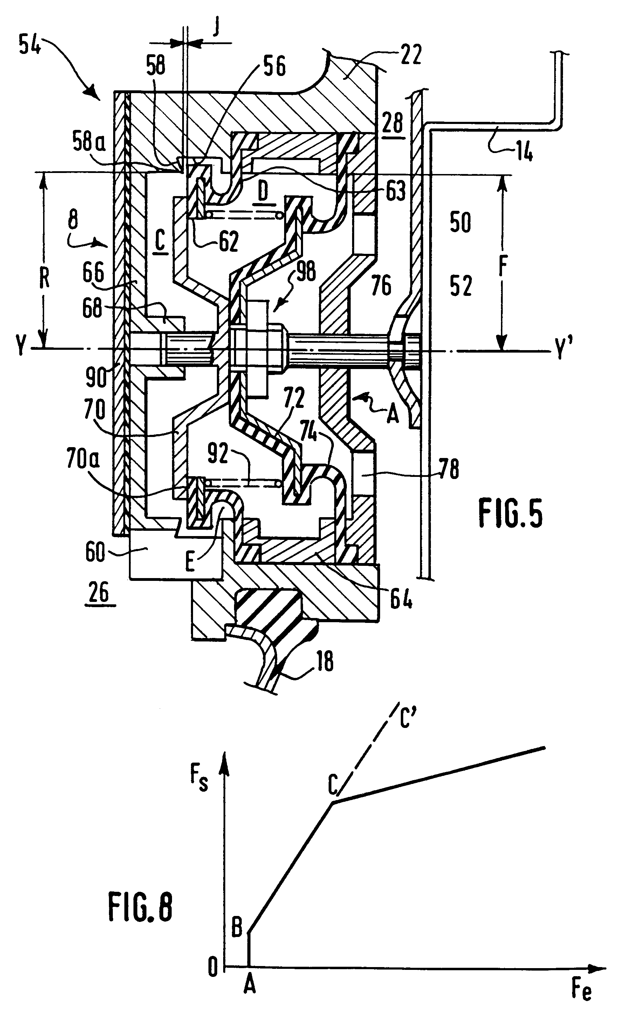

Le piston 22 est formé avec une enceinte, désignée dans son ensemble par la référence 54, et décalée radialement par rapport à l'axe X-X'. L'enceinte 54 de la Figure 1 est représentée sur les Figures 3 à 5 selon trois coupes longitudinales différentes repérées par les lignes correspondantes sur la Figure 2, la Figure 5 correspondant à la Figure 1 à une échelle agrandie.

On voit sur les Figures 3 à 5 que l'enceinte 54 est délimitée par une paroi latérale 56, cylindrique dans l'exemple représenté, formée dans le piston 22, et d'axe Y-Y' parallèle à l'axe X-X'. La paroi 56 présente un épaulement radial 58 dont le bord périphérique intérieur 58a forme un cercle de rayon R autour de l'axe Y-Y' dirigé vers l'intérieur. Une ouverture sensiblement radiale 60 est pratiquée en arrière de l'épaulement 58 dans la paroi 56 pour faire communiquer l'espace défini à l'intérieur de l'enceinte 54 par la paroi 56 avec la chambre avant 26 du servomoteur.

Un clapet annulaire 62 est disposé à l'intérieur de l'enceinte 54. Le clapet 62 constitue l'extrémité d'un élément de montage et d'étanchéité, comme par exemple, un manchon souple 63, par exemple en élastomère, dont l'extrémité arrière, de plus grand diamètre, est fixée de façon étanche sur la paroi 56, par exemple par un bourrelet périphérique maintenu en place par un anneau ou une bague 64.

L'enceinte 54 est également délimitée par une paroi avant 66 sur la face arrière de laquelle sont disposés des moyens de guidage en translation de l'extrémité avant de la tige 52. De tels moyens sont constitués par exemple par un téton creux 68.

La tige 52 est solidaire d'une coupelle 70 approximativement tronconique de diamètre extérieur et inférieur à celui du bord périphérique 58a de l'épaulement 58. La tige 52 est également solidaire d'un disque 72, approximativement tronconique et de conicité inverse à celle de la coupelle 70, servant de support à un élément d'étanchéification tel qu'une membrane 74. La membrane 74 est fixée de façon étanche à la tige 52, son bord périphérique intérieur étant par exemple serré entre la coupelle 70 et le disque 72. Elle est également fixée de façon étanche sur la paroi 56, par exemple par un bourrelet périphérique maintenu en place entre l'anneau 64 et un couvercle arrière 76 fixé sur le piston 22 et formant la paroi arrière de l'enceinte 54. Le couvercle arrière 76 est traversé en son centre par la tige 52 et assure le guidage en translation de celle-ci, et des ouvertures 78 y sont formées de sorte que l'espace compris entre la membrane 74 et le couvercle arrière 76 soit en communication permanente avec la chambre arrière 28 du servomoteur.

Dans le piston 22 est formé un passage axial 80 (Figure 3), obturé de façon étanche à son extrémité arrière par le couvercle arrière 76, et dont l'extrémité avant communique en permanence avec l'atmosphère extérieure au moyen d'un soufflet 82 fixé de façon étanche d'une part à la face avant du piston 22 autour du passage 80, et d'autre part à la paroi avant du cylindre 12. Un filtre à air pourra avantageusement être disposé à l'intérieur du soufflet 82.

Un passage radial 84 est formé dans le piston 22 et l'anneau 64. Il fait communiquer le passage 80 avec l'espace défini à l'intérieur de l'enceinte 54 par la paroi 56, et il débouche dans la paroi 56 entre les fixations sur cette paroi du clapet 62 et de la membrane 74.

Un second passage axial 86 (Figure 4) est formé dans le piston 22 et le couvercle 76 pour déboucher dans la chambre arrière 28 du servomoteur. L'extrémité avant du passage 86 débouche dans un second passage radial 88 formé entre la face avant du piston 22 et un couvercle avant 90 fixé de façon étanche sur le piston 22. Le passage 88 débouche dans l'enceinte 54 en avant de l'épaulement 58.

Enfin, un ressort de compression 92 est disposé entre la face arrière du clapet 62 et la face avant de la membrane 74 renforcée par le disque 72.

On voit ainsi que l'enceinte 54 apparaît comme étant formée de deux volumes A et B. Le volume arrière A est constitué par l'espace situé entre la membrane 74, renforcée par le disque 72, et le couvercle arrière 76. Ce volume A est en permanence en communication avec la chambre arrière 28 du servomoteur, et donc à la même pression. Le volume avant B est situé à l'avant de la membrane 74 et comporte la coupelle 70, l'épaulement 58, le clapet 62 et le ressort 92 qui constituent une valve à trois voies entre les espaces C situé entre la face avant de la coupelle 70 et la face arrière de la paroi avant 66, D situé entre la face arrière de la coupelle 70 et la face avant de la membrane 74, et E situé derrière l'épaulement 58 et devant la fixation étanche du manchon souple 63 sur la paroi 56. Les espaces C, D, E constituent ainsi le volume avant B.

Le fonctionnement du servomoteur qui vient d'être décrit va maintenant être expliqué.

Dans la position de repos du servomoteur, représentée sur les Figures, le piston 22 vient en appui, sous l'effet du ressort 30, sur la face avant du couvercle 14, par exemple par l'intermédiaire de portées 94. La tige de commande 38 est elle-même sollicitée vers l'arrière par un ressort de compression 96 disposé entre des épaulements de la partie tubulaire 32 et de la tige 38.

La tige 38 sollicite donc le plongeur 36, l'organe de montage 40 et la clé 44 vers l'arrière, cette dernière venant également en butée sur la face avant du couvercle 14, par l'intermédiaire de sa partie avant annulaire 48. La clé 44 et l'organe de montage 40 jouent ainsi le rôle d'organe de butée pour limiter vers l'arrière la course axiale du plongeur 36 dans l'alésage 34 du piston 22.

Le piston de valve 98, comportant l'équipage mobile par rapport au piston de servomoteur 22, qui est constitué de la tige 52, la coupelle 70, et le disque 72 associé à la membrane 74, est donc lui-aussi dans sa position arrière de repos. Dans cette position, le bord périphérique extérieur 70a de la coupelle 70 est situé dans un plan, perpendiculaire à l'axe Y-Y', légèrement en arrière d'une distance J du plan contenant le bord périphérique intérieur 58a de l'épaulement 58. De la sorte, le clapet 62, sollicité vers l'avant par le ressort 92, est en appui étanche sur la coupelle 70 et est écarté de la distance axiale J de l'épaulement 58, faisant ainsi communiquer les espaces C et E.

Lorsque le servomoteur est installé sur le véhicule, la chambre avant 26 communique en permanence par un embout 95 avec une source de basse pression, par exemple une source de basse pression constituée par exemple par le collecteur d'admission du moteur thermique du véhicule, ou par le côté aspiration d'une pompe à vide si le véhicule est équipé d'un moteur diesel.

L'espace E est en permanence à la même pression que la chambre avant 26 par le passage 60. Dans la position de repos, l'espace C communique avec l'espace E par le jeu J entre le clapet 62 et l'épaulement 58 et se trouve donc à la même pression que la chambre avant 26.

La chambre arrière 28 communique en permanence avec l'espace C par les passages 86 et 88 et se trouve donc à la même pression que la chambre avant 26, de même que le volume A. L'étanchéité de la chambre arrière 28 vis à vis de l'extérieur du servomoteur est assurée par un soufflet 100, fixé de façon étanche d'une part à la paroi arrière du couvercle 14, par exemple au niveau de l'ensemble de guidage 33, et d'autre part sur la tige de commande 38.

L'espace D communique en permanence avec l'atmosphère par les passages 84 et 80 et le soufflet 82, et est isolé de façon étanche, en position de repos, du reste de l'enceinte 54 par le clapet 62 en appui sur le bord périphérique 70a de la coupelle 70 sous l'effet du ressort 92.

En résumé, dans la position de repos du servomoteur, seuls l'espace D et le soufflet 82 sont soumis à la pression atmosphérique, tout le reste du servomoteur étant sous dépression. La pression régnant dans le soufflet 82 n'engendrant aucune force axiale pourra donc être ignorée dans la suite de la description. La différentielle de pressions entre l'espace D et le reste de l'enceinte 54 a pour effet d'engendrer des forces axiales opposées sur le piston de valve 98 : une force dirigée vers l'avant sur la surface active du moyen de valve constituée par la coupelle 70 et le manchon 63 jusqu'à sa fixation sur la paroi 56, et une force dirigée vers l'arrière sur la surface active de la face avant de la membrane 74 jusqu'à sa fixation par la bague 64.

Grâce à l'invention, il est possible, comme on l'a représenté sur la Figure 5, de rendre ces surfaces actives égales, c'est-à-dire de fixer le manchon 63 et la membrane 74 sur la paroi 56 sur un même rayon F au moyen de la bague 64 pour que les forces créées sur les surfaces correspondantes soient égales et de sens contraire. Le piston de valve 98 n'est donc soumis au repos à aucune force d'origine pneumatique, et se trouve donc parfaitement équilibré. Il en résulte plusieurs caractéristiques particulièrement avantageuses qui vont être exposées ci-après en référence aux différentes phases de fonctionnement du servomoteur.

On a vu plus haut que, au repos, l'ensemble du servomoteur se trouve sous pression réduite, sauf l'espace D, qui n'engendre aucune force axiale d'origine pneumatique sur le piston de valve 98. Une différentielle de pressions existe donc au repos sur la surface S définie par la fixation sur le couvercle 14 du soufflet d'étanchéité 100, l'avant de cette surface étant soumis à la pression réduite régnant dans la chambre arrière 28, et l'arrière étant soumis à la pression atmosphérique. Cette différentielle de pressions donne naissance à une force dirigée vers l'avant, exercée sur la tige de commande 38 par le soufflet 100.

Il suffit donc que la précontrainte au repos du ressort 96 soit légèrement supérieure à cette force pour être assuré que la tige de commande 38, ainsi que le plongeur 36 et par conséquent le piston de valve 98, occupent effectivement leur position arrière extrême par rapport au piston de servomoteur 22. Il suffit également que la précontrainte au repos du ressort 30 soit légèrement supérieure à celle du ressort 96 pour qu'on soit assuré que toutes les pièces mobiles occupent effectivement leur position arrière de repos dans le servomoteur.

Dans un premier temps, l'enfoncement de la pédale de frein par le conducteur a par conséquent pour effet d'égaler l'effort de précontrainte au repos du ressort 96, diminué de la force exercée par la pression atmosphérique sur la surface S. Connaissant la surface S et l'intensité maximale de la dépression pouvant être fournie au servomoteur, il sera facile de déterminer les caractéristiques du ressort 96 pour que l'effort à fournir par le conducteur soit le plus faible possible.

Une fois cet effort vaincu, il se produit un léger déplacement de la tige de commande 38 et du plongeur 36, qui entraîne le déplacement de l'organe de montage 40, de la clé 44 et du piston de valve 98. Ce dernier n'étant soumis à aucune force d'origine pneumatique se déplace librement en translation, n'introduisant aucun effort parasite, et donc aucun couple sur la clé 44, qui se déplace donc également librement en translation.

Au cours de ce léger déplacement du piston de valve 98, le clapet 62 accompagne le bord périphérique 70a de la coupelle 70, jusqu'à ce qu'il vienne au contact du bord périphérique intérieur 58a de l'épaulement 58, c'est-à-dire jusqu'à ce qu'il ait parcouru la course J. Les espaces C et E sont alors isolés l'un de l'autre, et donc également les chambres arrière 28 et avant 26 du servomoteur respectivement en communication permanente avec ces espaces.

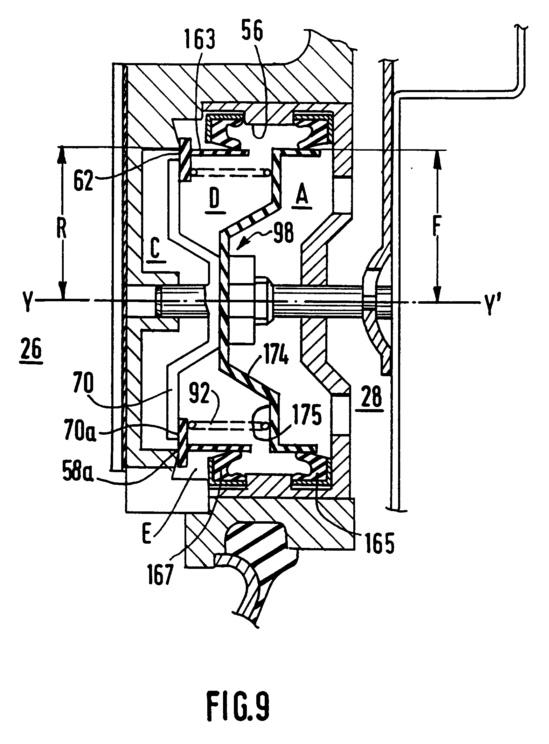

Dans cette première phase de fonctionnement du servomoteur, qui correspond au segment OA sur la Figure 8, la force exercée sur la tige de commande 38 n'engendre aucune force sur la tige de poussée 35 à la sortie du servomoteur.

Le segment OA correspond à l'effort d'attaque du servomoteur. On a vu que la valeur de cet effort d'attaque peut être réduite à une valeur minimale par un choix convenable de la précontrainte au repos du ressort 96.

La course effectuée par la tige de commande 38, et donc par le piston de valve 98, pendant l'application de cet effort d'attaque, constitue la course morte du servomoteur. Elle est en fait représentée par la distance J séparant le clapet 62 du bord périphérique intérieur 58a de l'épaulement 58.

Grâce à l'invention, cette course morte peut être réduite à une valeur minimum. En effet, dans la position de repos, le piston 22 ainsi que la clé 44, solidaire du piston de valve 98, sont en appui sur la face avant du couvercle 14. La distance J ne fait donc intervenir que deux côtes ou distances axiales, prises chacune sur une pièce différente par rapport à un même plan de référence, ce que l'on sait réaliser facilement avec une grande exactitude.

Plus précisément, la distance J est égale à la côte, mesurée sur le piston de servomoteur 22, entre le bord 58a de l'épaulement 58 et la face arrière de la portée 94, diminuée de la côte, mesurée sur le piston de valve 98 associé à la clé 44 entre le bord 70a de la coupelle 70 et la face arrière de la partie annulaire 48 de la clé 44. Le piston 22 étant par exemple une pièce moulée et le piston de valve étant assemblé sur la clé 44, ces deux côtes pourront être respectées de façon précise pour que la distance J ait une valeur parfaitement déterminée, et en l'occurrence très faible, de l'ordre de quelques dixièmes de millimètre.

On voit ainsi qu'on a réalisé, grâce à l'invention, un servomoteur dont l'effort d'attaque et la course morte ont une valeur facilement maîtrisable, et qui peut être réduite à un minimum.

Dans une deuxième phase de l'actionnement du frein, correspondant au segment AB sur la Figure 8, le piston de valve 98 se trouve déplacé suffisamment vers l'avant pour que le clapet 62 soit en contact étanche avec le bord 58a de l'épaulement 58, et que le bord 70a de la coupelle 70 commence à s'éloigner du clapet 62. Dans ces conditions, l'espace D communique avec l'espace C, c'est-à-dire que la chambre arrière 28 du servomoteur est isolée de la chambre avant 26 et entre en communication avec l'atmosphère.

Une différence de pressions s'établit donc de part et d'autre de la membrane 18 et de la jupe 24 qui engendre une force d'assistance tendant à déplacer le piston 22 vers l'avant. Ce déplacement est transmis à la tige de poussée 35 par le disque de réaction 37.

Au cours de cette deuxième phase, la force d'assistance exercée par le piston 22 ne déforme pas suffisamment le disque de réaction 37 pour que ce dernier remplisse totalement l'espace correspondant au jeu qui sépare initialement sa face arrière de la face avant du plongeur 36. Par conséquent, la force de sortie Fs appliquée au maître-cylindre par la tige de poussée 35 augment brutalement jusqu'à la valeur B sur la Figure 8, alors que la force Fe exercée sur la tige de commande 38 reste inchangée.

Le point B sur la Figure 8 correspond au seuil pour lequel la force d'assistance engendrée dans le servomoteur et exercée sur le disque de réaction 37 par la face avant annulaire 22a du piston 22 devient suffisante pour que la partie centrale du disque de réaction vienne au contact de la face avant du plongeur 36 et commence à exercer sur celui-ci, et par conséquent sur la pédale de frein, une réaction.

La longueur du segment AB sur la Figure 8 correspond à ce qu'on appelle le saut du servomoteur, qui est donc étroitement lié à la distance au repos entre la face arrière du disque de réaction et la face avant du plongeur.

Grâce à l'invention, le saut du servomoteur peut être ajusté à toute valeur désirée. En effet, dans la position de repos, le piston 22 ainsi que la clé 44, solidaire du plongeur 36, sont en appui sur la face avant du couvercle 14. Le saut du servomoteur ne fait donc intervenir que deux côtes, prises chacune sur une pièce différente, par rapport à un même plan de référence.

De façon plus précise, le saut du servomoteur est déterminé par la côte, mesurée sur le plongeur 36 associé à la clé 44, entre la face arrière de la partie annulaire 48 de la clé 44 et la face avant du plongeur 36, diminuée de la côte, mesurée sur le piston 22, entre la face avant annulaire 22a et la face arrière de la portée 94.

A l'instar de la course morte, ces deux côtes pourront être respectées de façon précise sur une pièce moulée et une pièce assemblée pour que le saut du servomoteur ait une valeur parfaitement déterminée.

On pourra par exemple prévoir, comme on l'a représenté sur la Figure 1, que la face arrière de la portée 94 soit dans le même plan que la face avant annulaire 22a du piston. Le saut du servomoteur sera alors déterminé uniquement par l'ensemble clé 44- plongeur 36.

Arrivé à ce stade de fonctionnement, c'est-à-dire pendant et après le saut du servomoteur, on voit que de l'air à la pression atmosphérique peut pénétrer dans la chambre arrière 28 par le soufflet 82, les passages 80 et 84, l'espace D, le passage de valve 62-70a, l'espace C, et les passages 88 et 86. La seule entrave au passage de l'air ne peut donc provenir que du passage de valve 62-70a.

Grâce à l'invention, ce passage de valve peut être réalisé avec un diamètre beaucoup plus grand, et donc une section de passage beaucoup plus grande, que dans les servomoteurs de l'art antérieur, où la valve est logée dans la partie tubulaire arrière, telle que 32, du piston. L'invention permet de s'affranchir d'une telle contingence, et des passages de valve de diamètre supérieur à deux fois le diamètre d'un passage de valve classique ont ainsi pu être réalisés. Il s'ensuit que le débit de l'air vers la chambre arrière est augmenté dans les mêmes proportions, et donc que le temps de réponse du servomoteur s'en trouve considérablement raccourci.

Une fois le saut du servomoteur effectué, c'est-à-dire au delà du point B sur la courbe de la Figure 8, la compression de la partie périphérique du disque de réaction sous l'effet de la force d'assistance créée par le piston 22 a pour conséquence une déformation vers l'arrière de la partie centrale du disque de réaction qui vient en contact à la face avant du plongeur. Ce dernier renvoie donc vers la pédale de frein une force de réaction représentative de l'effort de freinage appliqué sur les freins du véhicule. Une telle disposition bien connue permet au conducteur de doser l'effort de freinage qu'il exerce sur la pédale de frein en fonction de la résistance qu'il rencontre, et qui augmente avec cet effort.

En supposant que le conducteur du véhicule exerce un effort constant supérieur à l'effort d'attaque, le servomoteur va adopter une position d'équilibre dans laquelle la pression dans la chambre arrière sera comprise entre la pression régnant dans la chambre avant et la pression atmosphérique, et où les deux passages de valve 62-70a et 62-58a sont fermés.

Dans de telles positions d'équilibre, il règne dans l'espace E une pression constante égale à la dépression présente dans la chambre avant 26, dans l'espace D une pression constante égale à la pression atmosphérique, et dans les espaces A et C une pression variable égale à la pression présente dans la chambre arrière 28.

Dans l'espace D, la pression atmosphérique s'exerce d'une part sur la surface de la membrane 74 jusqu'à sa fixation par la bague 64, et d'autre part sur la face arrière de la coupelle 70, sur le clapet 62 en appui étanche sur le bord 70a sur cette dernière et sur le manchon 63 jusqu'à sa fixation par la bague 64.

Dans l'espace C, la pression variable s'exerce sur la surface active formée par la face avant de la coupelle 70 et par la face avant du clapet 62 en appui étanche sur le bord 70a de cette dernière, jusqu'à l'appui étanche du clapet 62 sur le bord 58a de l'épaulement 58.

Dans l'espace A, cette même pression variable s'exerce sur la face arrière de la membrane 74, renforcée par le disque 72, jusqu'à sa fixation par la bague 64.

Grâce à l'invention, il est possible d'équilibrer le piston de valve 98 pour que, dans les différentes positions d'équilibre, il ne soit soumis à aucune force d'origine pneumatique.

En effet, si la membrane 74 est fixée sur la paroi 56 selon un rayon F égal au rayon R du bord 58a de l'épaulement 58, sur lequel vient en appui le clapet 62, autrement dit si la surface délimitée par le bord 58a est égale aux surfaces actives précédemment définies, alors les forces axiales engendrées par la pression dans l'espace D sont contre balancées par les forces axiales engendrées par la pression régnant dans les espaces A et C, ces forces s'équilibrant deux à deux sur des surfaces actives égales La pression réduite régnant dans la chambre avant 26 et présente dans l'espace E n'engendre aucune force axiale si les rayons R et F sont égaux, et n'intervient donc pas dans cette phase de fonctionnement.

On voit donc que, en phase d'assistance, le piston de valve 98 est toujours équilibré, n'étant soumis à aucune force axiale d'origine pneumatique. Le servomoteur n'introduit donc aucun effort parasite pour passer d'une position d'équilibre à une autre, mis à part l'effort nécessaire à la compression du ressort 92, qui peut être tenu pour négligeable.

Lorsque le conducteur du véhicule continue d'augmenter son effort sur la pédale de frein pour accroître l'action de freinage, de plus en plus d'air est admis dans la chambre arrière du servomoteur, jusqu'à ce que la pression dans cette dernière soit égale à la pression atmosphérique. Le servomoteur fournit alors la force d'assistance maximale dont il est capable, et on dit qu'il est arrivé à saturation. Ce phénomène se traduit par le point C de la courbe de la Figure 8, au delà duquel toute augmentation de l'effort de sortie ne peut être obtenue que par une égale augmentation de l'effort d'entrée.

Dans une telle phase de saturation, le passage de valve 62-70a est ouvert et la pression atmosphérique règne dans la chambre arrière 28 et dans les espaces A, C et D, la dépression régnant dans la chambre avant 26 et l'espace E. Les rayons R et F ayant été choisis égaux, le clapet 62, en appui sur le siège 58a grâce au ressort 92, et le manchon 63 ne subissent aucune force axiale d'origine pneumatique. Il en résulte donc que le piston de valve 98 n'aura aucun effort à fournir sur le clapet 62 pour lui faire re-ouvrir le passage de valve 62-58a lorsque le conducteur cessera son action de freinage.

On voit donc qu'on a réalisé, grâce à l'invention, un servomoteur dont le piston de valve est constamment équilibré, c'est-à-dire n'étant l'objet d'aucune force axiale d'origine pneumatique quel que soit son état de fonctionnement, c'est-à-dire encore sur tous les points de la courbe de la Figure 8.

Il en résulte une caractéristique très importante du servomoteur selon l'invention, à savoir que l'effort à exercer sur le plongeur pour actionner le servomoteur est sensiblement égal à celui qu'on exerce sur lui en phase de défreinage. On obtient ainsi un servomoteur où, selon les termes utilisés dans le technique, l'effort d'attaque est sensiblement égal à l'effort de retour.

Cette caractéristique permet de réduire très sensiblement la précontrainte au repos du ressort 96. En effet, celui-ci n'a pour objet que de vaincre la force due, au repos, à la différence de pressions s'exerçant sur la surface S. Il suffit donc que cette précontrainte soit légèrement supérieure à cette force, pour obtenir un servomoteur dont l'effort d'attaque soit minimum, et égal à la différence entre ces deux forces antagonistes.

On aura de plus remarqué que, lors d'un défreinage, le temps de réponse se trouve également réduit. En effet, comme on l'a expliqué plus haut, lorsque le conducteur fait décroître la force qu'il applique, par l'intermédiaire de la pédale de frein, sur la tige de commande 38, celle-ci recule et entraîne dans son mouvement le plongeur 36, la clé 44 et le piston de valve 98. Ce faisant, le siège de valve 70a revient au contact du clapet 62, puis fait reculer ce dernier en éloignement du siège de valve 68a, c'est-à-dire que les espaces C et D sont d'abord isolés l'un de l'autre, puis que l'espace C est mis en communication avec l'espace E, et par conséquent la chambre arrière 28 avec la chambre avant 26.

On a vu que toutes ces opérations se dérouleraient sans être entraînées par des efforts parasites d'origine pneumatique, qui auraient pu les ralentir . De plus, l'air contenu dans la chambre arrière 28 est aspiré dans la chambre avant 26 par les passages 86 et 88, l'espace C, le passage de valve 58a-62, l'espace E et le passage 60. Le passage de valve 58a-62 ayant un diamètre supérieur à celui du passage de valve 62-70a, lui-même étant déjà important, le débit de l'air de la chambre arrière vers la chambre avant se trouve lui-aussi augmenté par rapport à l'art antérieur, et ainsi le temps de réponse du servomoteur en phase de défreinage s'en trouve raccourci d'autant.

On a donc bien réalisé, conformément au problème que s'était posé la présente invention, un servomoteur dont la course morte, l'effort d'attaque et les temps de réponse en freinage et défreinage peuvent être réduits à des valeurs minimales, et dont le saut peut être ajusté à toute valeur désirée.

Un tel servomoteur a de plus un fonctionnement silencieux puisque l'air nécessaire à son fonctionnement est aspiré par le soufflet 82 débouchant à l'avant du cylindre 12, disposé dans le compartiment moteur. Aucun bruit de fonctionnement n'est donc généré dans l'habitacle du véhicule.

Ce servomoteur est également fiable puisque, en cas de défaillance de la source de dépression, la tige de commande actionne directement la tige de poussée par l'intermédiaire du disque de réaction. A cet égard, il faut rappeler que, étant donné que l'invention permet de réaliser un piston 22 avec une partie tubulaire arrière 32 de diamètre réduit, la surface S de fixation sur le couvercle 14 du soufflet d'étanchéité 100 est elle-même réduite, de sorte que la précontrainte au repos du ressort 30 de rappel du piston peut elle-même être réduite, ce qui présente un avantage important dans l'hypothèse d'une défaillance de la source de pression.

On a représenté sur la Figure 9 une variante du moyen de valve illustré sur la Figure 5. Les éléments de la Figure 9 correspondant à ceux de la Figure 5 portent le même numéro de référence, augmenté d'une centaine.

Selon cette variante, au lieu d'utiliser une membrane souple 74 et un manchon souple 63, on a utilisé des pistons. Ainsi, la séparation entre les espaces A et D est assurée par un piston 174 solidaire du piston de valve 98. Le piston 174 coulisse de façon étanche sur la paroi 56 grâce à un joint d'étanchéité 165, par exemple un joint à lèvre comme représenté.

De même, le clapet 62 constitue l'extrémité d'un piston 163, coulissant de façon étanche sur la paroi 56, grâce à un joint d'étanchéité 167, à lèvre dans l'exemple représenté. Le ressort 92 est disposé entre la face arrière du clapet 62 et un épaulement radial 175 du piston 174.

Conformément à l'invention, les pistons 174 et 163 sont réalisés avec des rayons de coulissement F égaux entre eux et au rayon R du bord 58a de l'épaulement 58, et coulissent sur des joints 165 et 167 disposés dans des gorges de la paroi 56, comme on l'a représenté.

Alternativement, on peut prévoir que la paroi 56 ait le même rayon que celui du bord 58a de l'épaulement 58, les joints 165 et 167 étant alors portés par les pistons 174 et 163 respectivement.

Le fonctionnement du servomoteur équipé du moyen de valve de la Figure 9 est totalement identique à celui qui a été décrit précédemment et ne sera donc pas explicité plus en détail.

L'homme de l'art pourra bien entendu utiliser un des éléments souples de la Figure 5 en combinaison avec un des pistons de la Figure 9.

L'invention permettant de réaliser un piston de valve 98 équilibré dans toutes les phases de fonctionnement, il en résulte quelles que soient les valeurs des pressions régnant dans la chambre avant 26 et dans la chambre arrière 28 du servomoteur, aucune force axiale d'origine pneumatique n'est créée sur le piston de valve 98, la force mécanique qu'il est nécessaire de lui appliquer pour l'actionner étant constante, et, grâce à l'invention, faible. Il s'ensuit que le servomoteur de l'invention peut être utilisé dans des conditions tout à fait nouvelles et avantageuses.

D'une part, au lieu d'utiliser la différence de pressions conventionnelle existant entre le collecteur d'admission du moteur thermique et l'atmosphère, toute autre différence de pressions, peut être utilisée. C'est ainsi que l'embout 95 pourra être raccordé à l'atmosphère et le soufflet 82 à une source d'air comprimé, ou encore que l'embout 95 soit raccordé à une pompe à vide et le soufflet 82 à une source d'air comprimé. Plus la différence entre les pressions fournies à l'embout 95 et au soufflet 82 sera grande, et plus la phase d'assistance sera importante, et donc plus le point C sera reculé sur la courbe de la Figure 8 en direction de C'. Il sera donc possible de réaliser, à performances égales, un servomoteur de diamètre et d'encombrement plus petits.

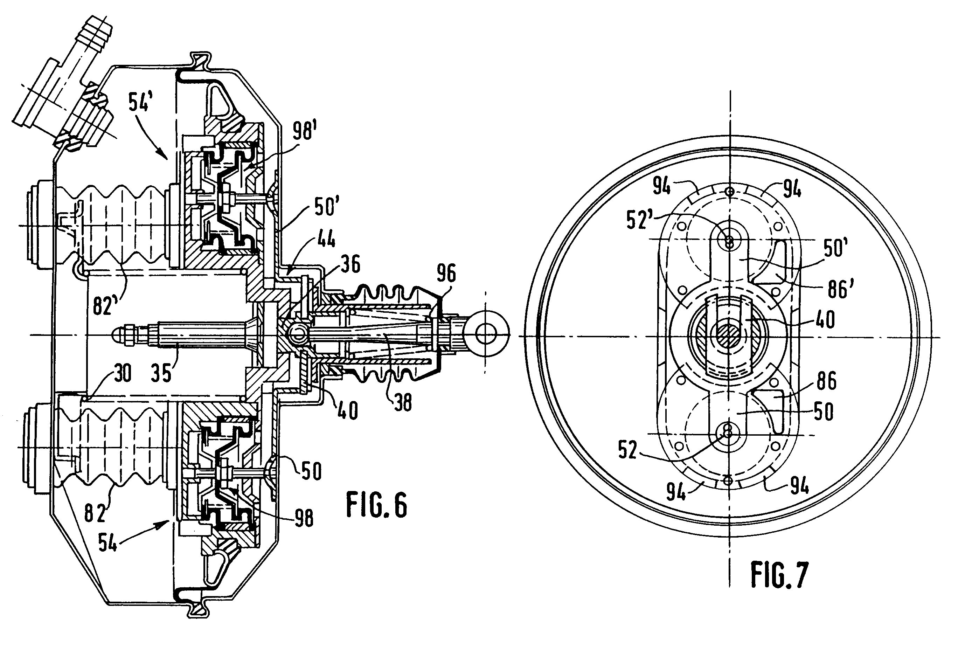

D'autre part, on peut également accroître les performances du servomoteur de l'invention, notamment en ce qui concerne le temps de réponse, en disposant plusieurs enceintes 54 sur le piston 22, associées à autant de pistons de valve 98. C'est ce qu'on a représenté sur les Figures 6 et 7, où l'on voit que la clé 44 est formée avec deux prolongements radiaux 50, 50' solidaires chacun d'une tige 52, 52' actionnant un piston de valve 98, 98' dans une enceinte 54, 54'. Il est évidemment possible de prévoir un nombre différent, par exemple trois ou quatre, de pistons de valve et d'enceintes, régulièrement répartis autour de l'axe X-X'. Une telle utilisation de plusieurs moyens de valve commandés en parallèle par une seule tige de commande 38 pour actionner une seule tige de poussée 35 est rendue possible par l'invention, puisque ces moyens de valve n'introduisent aucun effort supplémentaire pour leur actionnement. C'est ainsi que les précontraintes au repos des ressorts 30 et 96 ne sont pas affectées par le nombre de moyens de valve utilisés, avec tous les avantages qui y sont attachés. L'homme de l'art pourra évidemment utiliser sur le servomoteur des Figures 6 et 7 des pistons de valve tels que décrits en référence à la Figure 9.

Bien entendu, l'invention n'est pas limitée aux modes de réalisation qui ont été décrits à titre d'exemple, mais est susceptible de recevoir de nombreuses modifications qui apparaîtront à l'homme du métier. C'est ainsi par exemple que l'invention pourra être appliquée à des servomoteurs doubles encore appelés tandem.

## Revendications

1. Servomoteur pneumatique d'assistance au freinage comportant à l'intérieur d'une enveloppe (10) un piston (22) délimitant à l'aide d'une membrane déroulante (18) une chambre avant (26) reliée en permanence à une source de basse pression et une chambre arrière (28) reliée sélectivement à la chambre avant (26) ou à une source de haute pression par au moins un moyen de valve (62, 58a, 70a) actionné par une tige de commande (38) disposée selon l'axe de symétrie (X, X') du servomoteur et susceptible de s'appuyer, par l'intermédiaire de la face avant d'un plongeur (36) sur une première face d'un disque de réaction (37) solidaire par une deuxième face d'une tige de poussée (35), le moyen de valve (62, 58a, 70a) étant commandé par une clé (44) solidaire du plongeur (36) et comportant un élément de clapet (62) coopérant avec un premier siège de valve (58a) formé sur le piston (22) et un second siège de valve (70a) formé sur un piston de valve (98) solidaire de la clé (44), caractérisé en ce que le moyen de valve (62, 58a, 70a) est entièrement disposé dans une enceinte (54) formée sur le piston (22), l'enceinte (54) comportant un volume arrière (A) et un volume avant (B) séparés de façon étanche par un élément d'étanchéification (74) solidaire du piston de valve (98), le moyen de valve (62, 58a, 70a) étant disposé dans le volume avant (B) de l'enceinte (54) formée sur le piston (22), le volume arrière (A) de l'enceinte (54) étant relié en permanence à la chambre arrière (28) du servomoteur.

2. Servomoteur selon la revendication 1, caractérisé en ce que l'élément d'étancheification (74) présente une surface active soumise en permanence à l'avant à la pression de la source de haute pression, et à l'arrière à la pression régnant dans la chambre arrière (28).

3. Servomoteur selon la revendication 2, caractérisé en ce que le piston de valve (98) comporte une coupelle (70) sur laquelle est formé le second siège de valve (70a) coopérant avec l'élément de clapet (62) constituant l'extrémité d'un élément de montage et d'étanchéité (63) pour former une surface active égale à celle de l'élément d'étanchéification (74).

4. Servomoteur selon la revendication 3, caractérisé en ce que la surface délimitée par le premier siège de valve (58a) formé sur le piston est égale aux surfaces actives de l'élément d'étanchéification (74) et de la coupelle (70) coopérant avec l'élément de clapet (62) constituant l'extrémité de l'élément de montage et d'étanchéité.

5. Servomoteur selon la revendication 1, caractérisé en ce que l'élément d'étanchéification comporte une membrane (74) fixée de façon étanche au piston de valve (98) et à une paroi (56) de l'enceinte (54).

6. Servomoteur selon la revendication 3, caractérisé en ce que l'élément de montage et d'étanchéité comporte un manchon souple (63) fixé de façon étanche à une paroi (56) de l'enceinte (54).

7. Servomoteur selon les revendications 5 et 6, caractérisé en ce que la membrane (74) et le manchon souple (63) sont fixés à la paroi (56) sur un même rayon (F), égal au rayon (R) formé par le premier siège de valve (58a) formé sur le piston (22).

8. Servomoteur selon la revendication 1, caractérisé en ce que l'élément d'étanchéification comporte un piston lié (174) solidaire du piston de valve (98) et coulissant de façon étanche sur une paroi (56) de l'enceinte (54).

9. Servomoteur selon la revendication 2, caractérisé en ce que l'élément de montage et d'étanchéité comporte un piston libre (163) coulissant de façon étanche sur une paroi (56) de l'enceinte (54).

10. Servomoteur selon la revendication 8 et 9, caractérisé en ce que le piston lié (174) et le piston libre (163) coulissent sur la paroi (56) sur un même rayon (F), égal au rayon (R) formé par le premier siège de valve (58a) formé sur le piston (22).

11. Servomoteur selon l'une des revendications précédentes, caractérisé en ce que la source de haute pression est une source d'air comprimé.

12. Servomoteur selon l'une des revendications précédentes, caractérisé en ce qu'il comporte plusieurs enceintes (54, 54') formées sur le piston (22) régulièrement réparties autour de l'axe (X-X') de symétrie du servomoteur contenant chacune un piston de valve (98, 98') actionné par la tige de commande (38).

## Claims

1. Pneumatic brake-booster including, inside a casing (10), a piston (22) defining, with the aid of a rolling seal (18), a front chamber (26) permanently connected to a source of low pressure and a back chamber (28) connected selectively to the front chamber (26) or to a source of high pressure by at least one valve means (62, 58a, 70a) actuated by a control rod (38) arranged along the axis of symmetry (X, X') of the booster and capable of pressing, by means of the front face of a plunger (36), on a first face of a reaction disk (37) secured by a second face to a push rod (35), the valve means (62, 58a, 70a) being controlled by a key (44) secured to the plunger (36) and including a valve element (62) interacting with a first valve seat (58a) formed on the piston (22) and a second valve seat (70a) formed on a valve piston (98) secured to the key (44), characterized in that the valve means (62, 58a, 70a) is entirely arranged in an enclosure (54) which is formed on the piston (22), the enclosure (54) including a back volume (A) and a front volume (B) separated in a sealed fashion by a sealing element (74) secured to the valve piston (98), the valve means being arranged in the front volume (B) of the enclosure (54) formed on the piston (22), the back volume (A) of the enclosure (54) being permanently connected to the back chamber (28) of the booster.

2. Booster according to Claim 1, characterized in that the sealing element (74) has one active surface permanently subjected, at the front, to the pressure of the source of high pressure and, at the back, to the pressure prevailing in the back chamber (28).

3. Booster according to Claim 2, characterized in that the valve piston (98) includes a dished element (70) on which is formed the second valve seat (70a) interacting with the valve element (62) constituting the end of a mounting and sealing element (63) so as to form an active surface which is equal to that of the sealing element (74).

4. Booster according to Claim 3, characterized in that the surface area delimited by the first valve seat (58a) formed on the piston is equal to the active surface areas of the sealing element (74) and of the dished element (70) interacting with the valve element (62) constituting the end of the mounting and sealing element.

5. Booster according to Claim 1, characterized in that the sealing element includes a seal (74) fixed in a sealed fashion to the valve piston (98) and to one wall (56) of the enclosure (54).

6. Booster according to Claim 3, characterized in that the mounting and sealing element includes a flexible sleeve (63) fixed in a sealed fashion to one wall (56) of the enclosure (54).

7. Booster according to Claims 5 and 6, characterized in that the seal (74) and the flexible sleeve (63) are fixed to the wall (56) on the same radius (F), equal to the radius (R) formed by the first valve seat (58a) formed on the piston (22).

8. Booster according to Claim 1, characterized in that the sealing element includes a connected piston (174) secured to the valve piston (98) and sliding in a sealed fashion over one wall (56) of the enclosure (54).

9. Booster according to Claim 2, characterized in that the mounting and sealing element includes a free piston (163) sliding in a sealed fashion over one wall (56) of the enclosure (54).

10. Booster according to Claim 8 and 9, characterized in that the connected piston (14) and the free piston (163) slide over the wall (56) on the same radius (F) equal to the radius (R) formed by the first valve seat (58a) formed on the piston (22).

11. Booster according to any of the preceding claims, characterized in that the source of high pressure is a source of compressed air.

12. Booster according to any of the preceding claims, characterized in that it includes several enclosures (54, 54') formed on the piston (22), which enclosures are evenly distributed about the axis (X-X') of symmetry of the booster, each enclosure containing a valve piston (98, 98') actuated by the control rod (38).

## Patentansprüche

1. Pneumatischer Bremsunterstützungs-Servomotor, der im Inneren eines Gehäuses (10) einen Kolben (22) aufweist, der mittels einer Abrollmembran (18) eine permanent mit einer Unterdruckquelle verbundene vordere Kammer (26) und eine hintere Kammer (28) abgrenzt, die selektiv mit der vorderen Kammer (26) oder einer Quelle hohen Drucks durch wenigstens ein Ventilmittel (62, 58a, 70a) verbunden ist, das von einer Steuerstange (38) betätigt wird, die entlang der Symmetrieachse (X-X') des Servomotors angeordnet ist und sich über die vordere Fläche eines Tauchkolbens (36) an einer ersten Fläche einer Reaktionsscheibe (37) abstützen kann, die über eine zweite Fläche fest mit einer Schubstange (35) verbunden ist, wobei das Ventilmittel (62, 58a, 70a) durch ein Betätigungsteil (44) gesteuert wird, das fest mit dem Tauchkolben (36) verbunden ist, und ein Ventilelement (62) aufweist, das mit einem an dem Kolben (22) gebildeten ersten Ventilsitz (58a) und einem zweiten Ventilsitz (70a) zusammenwirkt, der an einem fest mit dem Betätigungsteil (44) verbundenen Ventilkolben (98) gebildet ist, dadurch gekennzeichnet, daß das Ventilmittel (62, 58a, 70a) vollständig in einem Raum (54) angeordnet ist, der an dem Kolben (22) gebildet ist, wobei der Raum (54) ein hinteres Volumen (A) und ein vorderes Volumen (B) aufweist, die in dichter Weise durch ein Abdichtungselement (74) getrennt sind, das fest mit dem Ventilkolben (98) verbunden ist, wobei das Ventilmittel (62, 58a, 70a) in dem vorderen Volumen (B) des an dem Kolben (22) gebildeten Raums (54) angeordnet ist, wobei das hintere Volumen (A) des Raumes (54) permanent mit der hinteren Kammer (28) des Servomotors verbunden ist.

2. Servomotor nach Anspruch 1, dadurch gekennzeichnet, daß das Abdichtungselement (74) eine aktive Fläche aufweist, die vorne permanent dem Druck der Hochdruckquelle und hinten dem in der hinteren Kammer (28) herrschenden Druck ausgesetzt ist.

3. Servomotor nach Anspruch 2, dadurch gekennzeichnet, daß der Ventilkolben (98) einen Teller (70) aufweist, an dem der zweite Ventilsitz (70a) gebildet ist, der mit dem Ventilelement (62) zusammenwirkt, welches das Ende eines Montage- und Dichtungselementes (63) bildet, um eine aktive Fläche zu bilden, die gleich derjenigen des Abdichtungselementes (74) ist.

4. Servomotor nach Anspruch 3, dadurch gekennzeichnet, daß die Fläche, die von dem am Kolben gebildeten ersten Ventilsitz (58a) abgegrenzt ist, gleich den aktiven Flächen des Abdichtungselementes (74) und des Tellers (70) ist, der mit dem Ventilelement (62) zusammenwirkt, welches das Ende des Montage- und Dichtungselementes bildet.

5. Servomotor nach Anspruch 1, dadurch gekennzeichnet, daß das Abdichtungselement eine Membran (74) aufweist, die in dichter Weise an dem Ventilkolben (98) und an einer Wand (56) des Raumes (54) befestigt ist.

6. Servomotor nach Anspruch 3, dadurch gekennzeichnet, daß das Montage- und Dichtungselement eine nachgiebige Manschette (63) aufweist, die in dichter Weise an einer Wand (56) des Raumes (54) befestigt ist.

7. Servomotor nach den Ansprüchen 5 und 6, dadurch gekennzeichnet, daß die Membran (74) und die nachgiebige Manschette (63) an der Wand (56) auf demselben Radius (F) befestigt sind, der gleich dem Radius (R) ist, der von dem an dem Kolben (22) gebildeten ersten Ventilsitz (58a) gebildet ist.

8. Servomotor nach Anspruch 1, dadurch gekennzeichnet, daß das Abdichtungselement einen gebundenen Kolben (174) aufweist, der fest mit dem Ventilkolben (98) verbunden ist und in dichter Weise an einer Wand (56) des Raumes (54) gleitet.

9. Servomotor nach Anspruch 2, dadurch gekennzeichnet, daß das Montage- und Dichtungselement einen freien Kolben (163) aufweist, der in dichter Weise an einer Wand (56) des Raumes (54) gleitet.

10. Servomotor nach den Ansprüchen 8 und 9, dadurch gekennzeichnet, daß der gebundene Kolben (174) und der freie Kolben (163) an der Wand (56) auf demselben Radius (F) gleiten, der gleich dem Radius (R) ist, der von dem an dem Kolben (22) gebildeten ersten Ventilsitz (58a) gebildet ist.

11. Servomotor nach einem der vorhergehenden Ansprüche, dadurch gekennzeichnet, daß die Quelle hohen Drucks eine Druckluftquelle ist.

12. Servomotor nach einem der vorhergehenden Ansprüche, dadurch gekennzeichnet, daß er mehrere an dem Kolben (22) gebildete Räume (54, 54') aufweist, die gleichmäßig um die Symmetrieachse (X-X') des Servomotors herum verteilt sind und jeweils einen Ventilkolben (98, 98') enthalten, der von der Steuerstange (38) betätigt wird.
